# EUROPÄISCHE PATENTANMELDUNG

(11) **EP 0 921 054 A1**
(43) Veröffentlichungstag der Anmeldung: **09.06.1999**
(21) Anmeldenummer: 98119121.6
(22) Anmeldetag: 09.10.1998
(51) Int. Cl.: B62D 29/02

(54) **Platte für den Innenausbau in Fahrzeugen und Verfahren zu deren Herstellung**

(30) Priorität: 04.12.1997 DE 19754143
(71) Anmelder: SORTIMO INTERNATIONAL AUSRÜSTUNGSSYSTEME FÜR SERVICEFAHRZEUGE GmbH, D-86441 Zusmarshausen (DE)
(72) Erfinder: Dischinger, Herbert, 86420 Didorf/Biburg (DE)
(74) Vertreter: Zipse + Habersack

(57) **Zusammenfassung**

Es wird eine Platte für den Innenausbau in Fahrzeugen sowie ein Verfahren zur Herstellung einer solchen Platte beschrieben. Die Platte besteht aus einer OSB-Platte (11), die auf ihrer einen Oberfläche (12) mit einem Kunststoffbelag (14) und auf ihrer anderen Oberfläche (13) mit einer Gegenkaschierung (15) beschichtet ist. Vorzugsweise erfolgt die Beschichtung gleichzeitig und durch ein Kaschierverfahren. Dadurch wird eine Platte mit hoher Ausreißfestigkeit geschaffen, die sich nicht verziehen kann und die eine hohe Rutschfestigkeit sowie eine hohe Abriebsfestigkeit aufweist. Daher kann die Platte beispielsweise vorteilhaft als Einlegeboden für Fahrzeuge verwendet werden, wobei der Boden nur lose in das Fahrzeug eingelegt und nicht mit der Karosserie verschraubt werden muß.

## Beschreibung

Die vorliegende Erfindung betrifft eine Platte für den Innenausbau in Fahrzeugen, insbesondere einen Einlegeboden für Fahrzeuge, mit einer Platte auf Holzbasis. Gemäß einem weiteren Aspekt betrifft die Erfindung ein Verfahren zur Herstellung einer solchen Platte.

Platten der genannten Art werden beispielsweise für den Ausbau von Lieferwagen und dergleichen verwendet. Hierbei finden sie insbesondere als Einlegeböden Verwendung. Die Platten sind als Mehrschichtplatten -beispielsweise als Sperrholzplatten- ausgebildet und können eine aufgerauhte oder eingefärbte Oberfläche aufweisen. Auf den Platten werden dann verschiedene Aufbauten angeordnet. Die Platten können aber auch nur als Lagerfläche für Güter dienen.

Nachteilig bei derartigen Platten ist, daß sie sich mit der Zeit verziehen können. Aus diesem Grund werden die bekannten Platten üblicherweise mit der Karosserie des Fahrzeugs verschraubt. Dies führt zu einem komplizierten und damit kostenintensiven Einbau der Platten. Weiterhin weisen Sperrholzplatten nur eine begrenzte Ausreißfestigkeit auf, so daß eine Befestigung von Aufbauten auf den Platten beziehungsweise die Befestigung der Platten an der Karosserie nur bis zu begrenzten Belastungen möglich ist.

Ausgehend hiervon liegt der vorliegenden Erfindung die Aufgabe zugrunde, eine Platte der genannten Art derart weiterzubilden, daß die zum Stand der Technik genannten Nachteile vermieden werden. Insbesondere soll eine Platte für den Innenausbau von Fahrzeugen geschaffen werden, die auf einfache und kostengünstige Weise herstellbar ist und die eine ausreichend hohe Steifigkeit gegen Verziehen und eine hohe Ausreißfestigkeit aufweist. Gemäß einem zweiten Aspekt der Erfindung soll ein Verfahren bereitgestellt werden, mit dem Platten für den Innenausbau in Fahrzeugen auf einfache und kostengünstige Weise hergestellt werden können.

Erfindungsgemäß wird die Aufgabe gemäß dem ersten Erfindungsaspekt dadurch gelöst, daß die Platte auf Holzbasis eine OSB-Platte (Oriented Strand Board - Platte, das heißt eine Spanplatte) ist und daß die OSB-Platte auf ihrer einen Oberfläche mit einem Kunststoffbelag und auf ihrer anderen Oberfläche mit einer Gegenkaschierung beschichtet ist.

Eine solche Platte weist eine Reihe von Vorteilen auf. So ist ein Verziehen der Platte im Gebrauch praktisch ausgeschlossen, da die durch den Kunststoffbelag ausgeübten Spannungen, die zu einem Verziehen der Platte führen könnten, durch die Gegenkaschierung kompensiert werden. Deshalb können erfindungsgemäße Platten lose verwendet werden, ohne daß sie mit den Fahrzeugwänden oder dem Fahrzeugboden verschraubt werden müßten. Dies vereinfacht den Einbau der Platten.

Weiterhin ist eine solche Platte günstig in der Herstellung, da sowohl die OSB-Platte als auch der Kunststoffbelag und die Gegenkaschierung auf einfache und billige Weise hergestellt werden können. Darüber hinaus weist die OSB-Platte eine hohe Ausreißfestigkeit auf, so daß Aufbauten auf der Platte sicher und fest verankert werden können.

Die erfindungsgemäßen Platten können allgemein für jede Form des Innenausbaus in Fahrzeugen verwendet werden. So ist es beispielsweise denkbar, daß die Platten als Boden- oder Seitenverkleidungen verwendet werden. Hierbei sind die Platten nicht auf die Verwendung in bestimmten Fahrzeugen beschränkt. Beispiele für entsprechende Fahrzeuge sind unter anderem Schienen-, Luft- und Straßenfahrzeuge allgemein, beispielsweise Transportfahrzeuge aller Art, LKW, Kundendienstfahrzeuge, Anhänger, Wohnmobile, öffentliche Verkehrsmittel, Waggons und dergleichen.

Bevorzugte Ausgestaltungen der Platten ergeben sich aus den rückbezogenen Unteransprüchen.

In vorteilhafter Ausgestaltung ist die OSB-Platte als mehrschichtig, vorzugsweise dreischichtig kreuzverleimte Holzwerkstoffplatte aus Furnierstreifen ausgebildet. Eine solche Platte ist besonders belastbar und vor allem dimensionsstabil. Damit kann die Gefahr eines Verziehens der Platte weiter verringert werden.

Als Einsatz für die OSB-Platte können resourcenschonende Holzsortimente und vor allem auch Restbestände, die bei der Herstellung anderer Holzprodukte anfallen, verwendet werden. Dadurch sind die Platten nicht nur kostengünstig sondern auch umweltschonend herstellbar. Geeignete Holzsorten für die OSB-Platten sind beispielsweise, jedoch nicht ausschließlich Birken-, Pappel-, Kiefern- oder Fichtenhölzer oder Mischungen daraus. Es können jedoch auch andere Nadelbaumbeziehungsweise Laubaumarten als Beimischungen eingesetzt werden.

Erfindungsgemäß kann die OSB-Platte eine Dicke von 6 bis 30 mm aufweisen. Als besonders vorteilhaft hat sich eine Dicke von etwa 12 mm erwiesen. Natürlich ist die Erfindung nicht auf die genannten Dicken beschränkt, so daß auch größere oder kleinere Dicken denkbar sind.

In weiterer Ausgestaltung weist die OSB-Platte eine Ausreißfestigkeit von 2000 bis 3000 kg, vorzugsweise 2500 bis 2900 kg auf. Durch diese hohe Ausreißfestigkeit wird sichergestellt, daß Aufbauten, die beispielsweise durch Einschlagmuttern an der Platte befestigt werden, sicher und vor Abriß geschützt auf der Platte gehalten werden. Auch für den Fall, daß die Platten etwa als Seitenteil mit den Fahrzeugwänden verschraubt werden, wird eine sichere Befestigung der Platten gewährleistet. Im Vergleich zu herkömmlichen Sperrholzplatten, die bisher als Einbauplatten verwendet wurden und eine Ausreißfestigkeit von nur etwa 540 bis 590 kg aufweisen, bedeutet dies eine Steigerung der Ausreißfestigkeit um das Vier- bis Fünffache.

OSB - Platten haben gewöhnlich eine schlechte, zerfurchte Oberfläche, so dass es zu einer unbefriedigenden Haftung und Abstützung des Kunststoffbelages und der Gegenkaschierung kommen kann. Vorteilhaft wird deshalb die OSB - Platte vorab beidseitig mit Dünnspanplatten von ca. 2-4 mm Stärke beschichtet, wodurch sich eine glatte Oberfläche ergibt, die einen ausgezeichneten Untergrund für den Kunststoffbelag und für die Gegenkaschierung bietet. Indem die Dünnspanplatten, wie die anschließend aufzubringenden Beläge von der Rolle kommen, ist eine kontinuierliche Fertigung möglich.

Nach einer weiteren Ausgestaltung der Erfindung kann der Kunststoffbelag aus einem Kunststoff auf Polyolefinbasis gebildet sein. Ein solcher Kunststoff bewirkt eine hohe Rutschfestigkeit sowohl im trockenen als auch im benetzten Zustand der Platte. Weiterhin zeigt der Kunststoff ein überdurchschnittlich gutes Verschleißverhalten und hier insbesondere eine hohe Abriebfestigkeit auf der Oberfläche. Zusätzlich ist ein derartiger Kunststoff leichter als andere Kunststoffe, geruchsneutral und recyclingfähig. All diese vorteilhaften Eigenschaften weist ein aus einem solchen Material bestehender Kunststoffbelag schon bei sehr geringen Dicken auf.

Der Kunststoffbelag kann bevorzugt chlorfrei und/oder weichmacherfrei und/oder schwermetallfrei und/oder lösungsmittelfrei sein.

Vorteilhaft kann der Kunststoffbelag eine Dicke von 1 bis 5 mm, vorzugsweise 2 bis 3 mm aufweisen. Jedoch sind je nach Anwendungsfall auch größere oder kleinere Dicken denkbar.

In weiterer Ausgestaltung kann die Gegenkaschierung aus Kunststoff oder Papier gebildet sein. Hierbei können beispielsweise, jedoch nicht ausschließlich Kunststoffolien, vorzugsweise chlorfreie Kunststoffolien oder lackierte oder gewachste Papiere verwendet werden. Wichtig ist nur, daß die Gegenkaschierung die von dem Kunststoffbelag ausgeübten Spannungen kompensieren kann.

Erfindungsgemäß können die OSB-Platte, der Kunststoffbelag und die Gegenkaschierung miteinander verklebt, vorzugsweise miteinander verleimt sein. Dadurch wird ein fester und inniger Verbund zwischen den einzelnen Plattenkomponenten geschaffen.

Dabei kann der Kleber vorteilhaft wasserfest sein. Dadurch wird eine Feuchtigkeitsbeständigkeit der Platte, insbesondere von deren Unterseite, die direkt mit den Wänden oder dem Boden des Fahrzeugs in Berührung kommt, gewährleistet.

In weiterer Ausgestaltung werden der Kunststoffbelag und die Gegenkaschierung gleichzeitig auf der OSB-Platte aufgebracht. Dadurch wird ein Verziehen der Platte verhindert, so daß die Platte auch ohne Verschraubung lose im Fahrzeug an-/aufgebracht werden kann.

In vorteilhafter Ausgestaltung kann die Platte als Einlegeboden lose in das Fahrzeug eingelegt werden. Durch die erfindungsgemäße Ausgestaltung kann sich die Platte nicht verziehen, so daß sie nicht mit der Fahrzeugkarosserie verschraubt werden muß. Dadurch wird der Montageaufwand stark verringert. Weiterhin können die Platten auf einfache Weise mit Aufbauten bestückt werden. Dabei ist es möglich, daß für ein und dasselbe Fahrzeug Platten mit verschiedenen Aufbauten vorgesehen sind, die je nach Bedarf einfach und ohne Aufwand ausgetauscht werden können.

Gemäß einem zweiten Aspekt der vorliegenden Erfindung wird ein Verfahren zur Herstellung einer Platte für den Innenausbau in Fahrzeugen bereitgestellt. Dabei kann es sich um ein Herstellungsverfahren für eine wie vorstehend beschriebene erfindungsgemäße Platte handeln. Erfindungsgemäß ist das Verfahren dadurch gekennzeichnet, daß eine OSB-Platte auf ihrer einen Oberfläche mit einem Kunststoffbelag und auf ihrer anderen Oberfläche mit einer Gegenkaschierung beschichtet wird. Die Beschichtung der OSB-Platte mit dem Kunststoffbelag und der Gegenkaschierung erfolgt vorzugsweise gleichzeitig.

Durch ein solches Verfahren können auf einfache und kostengünstige Weise Platten hergestellt werden, die zum einen gegen ein Verziehen geschützt sind und die zum anderen eine hohe Ausreißfestigkeit aufweisen. Im Hinblick auf die Vorteile, Effekte, Wirkungen und Funktionen der einzelnen Schritte und Merkmale des Verfahrens wird auf die vorstehenden Ausführungen zur erfindungsgemäßen Platte vollinhaltlich Bezug genommen und hiermit verwiesen.

Erfindungsgemäß kann die Beschichtung der OSB-Platte durch ein Kaschierverfahren, vorzugsweise durch ein Roll-Kaschierverfahren erfolgen. Hierbei werden mit angepaßten Kleber- beziehungsweise Leimsystemen der Kunstoffbelag und die Gegenkaschierung gleichzeitig auf der OSB-Platte aufgebracht.

Die vorliegende Erfindung wird nun anhand eines Ausführungsbeispiels unter Bezugnahme auf die beiliegende Zeichnung näher erläutert.

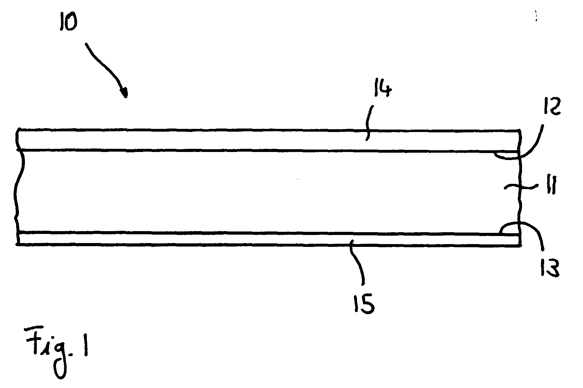

Dabei zeigt die einzige Figur 1 eine schematische Querschnittsansicht durch die erfindungsgemäße Platte für den Innenausbau in Fahrzeugen.

In Fig.1 ist diese Platte als Einlegeboden 10 für Fahrzeuge dargestellt. Der Einlegeboden 10 besteht aus einer OSB-Platte 11 mit einer Dicke von 12 mm und einer Ausreißfestigkeit von 2575 bis 2895 kg. Die OSB-Platte 11 ist an ihrer einen Oberfläche 12 mit einem Kunststoffbelag 14 auf Polyolefinbasis beschichtet. Der Kunststoffbelag 14 hat eine Dicke von 2 bis 3 mm. Auf der anderen Oberfläche 13 ist die OSB-Platte 11 mit einer Gegenkaschierung 15 aus gewachstem Papier beschichtet. Durch die beidseitige Beschichtung der OSB-Platte 11 wird ein Verziehen der Platte aufgrund von Spannungen des Kunststoffbelags oder anderen Einflüssen verhindert.

Der Einlegeboden 10 kann somit lose in ein Fahrzeug eingelegt werden, ohne daß er mit der Karosserie verschraubt werden muß. Weiterhin ist der Einlegeboden aufgrund seiner Beschichtung mit dem Kunststoffbelag sehr rutschfest und widerstandsfähig gegen Abrieb. Deshalb eignet sich der Einlegeboden 10 besonders als Unterlage in Kundendienst- oder Servicefahrzeugen, in denen beispielsweise eine Werkbank montiert ist und in die viele Werkzeuge und andere Gegenstände ein- und ausgeladen werden müssen. Auf dem Einlegeboden 10 können je nach Bedarf unterschiedliche Aufbauten befestigt werden. Die Befestigung erfolgt beispielsweise durch Einschlagmuttern. Wegen der hohen Ausreißfestigkeitswerte der OSB-Platte 11 können die Einschlagmuttern aus dem Einlegeboden 10 nicht ausreißen, so daß die Aufbauten sicher und fest auf dem Einlegeboden 10 gehalten werden.

Die einzelnen Bestandteile des Einlegebodens 10 sind vorzugsweise mittels eines wasserfesten Klebers verklebt, so daß der Einlegeboden 10 ebenfalls feuchtigkeitsbeständig ist.

Um zu gewährleisten, daß von dem Kunstoffbelag 14 keinerlei Spannung auf die OSB-Platte 11 ausgeübt wird, die zu einem Verziehen des Einlegebodens 10 führen könnte, erfolgt die Beschichtung der beiden Oberflächen 12, 13 der OSB-Platte 11 mit dem Kunststoffbelag 14 und der Gegenkaschierung 15 gleichzeitig.

Dabei wird die Beschichtung der OSB-Platte 11 mittels eines Kaschierverfahrens, vorzugsweise mittels eines Roll-Kaschierverfahrens vorgenommen.

## Patentansprüche

1. Platte für den Innenausbau in Fahrzeugen, insbesondere Einlegeboden für Fahrzeuge, mit einer Platte auf Holzbasis, dadurch gekennzeichnet, daß die Platte auf Holzbasis eine OSB-Platte (11) ist und daß die OSB-Platte (11) auf ihrer einen Oberfläche (12) mit einem Kunststoffbelag (14) und auf ihrer anderen Oberfläche (13) mit einer Gegenkaschierung (15) beschichtet ist.

2. Platte nach Anspruch 1, dadurch gekennzeichnet, daß die OSB-Platte (11) als mehrschichtig, vorzugsweise dreischichtig kreuz verleimte Holzwerkstoffplatte aus Furnierstreifen ausgebildet ist.

3. Platte nach Anspruch 1 oder 2, dadurch gekennzeichnet, daß die OSB-Platte (11) eine Dicke von 6 bis 30 mm, vorzugsweise eine Dicke von etwa 12 mm aufweist.

4. Platte nach einem der Ansprüche 1 bis 3, dadurch gekennzeichnet, daß die OSB-Platte (11) eine Ausreißfestigkeit von 2000 bis 3000 kg, vorzugsweise 2500 bis 2900 kg aufweist.

5. Platte nach einem der Ansprüche 1-4, dadurch gekennzeichnet, dass die OSB - Platte (11) beidseitig mit einer Dünnspanplatte beschichtet ist.

6. Platte nach einem der Ansprüche 1 bis 5, dadurch gekennzeichnet, daß der Kunststoffbelag (14) aus einem Kunststoff auf Polyolefinbasis gebildet ist.

7. Platte nach einem der Ansprüche 1 bis 6, dadurch gekennzeichnet, daß der Kunststoffbelag (14) eine Dicke von 1 bis 5 mm, vorzugsweise 2 bis 3 mm aufweist.

8. Platte nach einem der Ansprüche 1 bis 7, dadurch gekennzeichnet, daß die Gegenkaschierung (15) aus Kunststoff oder Papier gebildet ist.

9. Platte nach einem der Ansprüche 1 bis 8, dadurch gekennzeichnet, daß die OSB-Platte (11), der Kunststoffbelag (14) und die Gegenkaschierung (15) miteinander verklebt, vorzugsweise miteinander verleimt sind.

10. Platte nach Anspruch 9, dadurch gekennzeichnet, daß der Kleber wasserfest ist.

11. Platte nach einem der Ansprüche 1 bis 10, dadurch gekennzeichnet, daß der Kunststoffbelag (14) und die Gegenkaschierung (15) gleichzeitig auf der OSB-Platte (11) aufgebracht werden.

12. Platte nach einem der Ansprüche 1 bis 11, dadurch gekennzeichnet, daß die als Einlegeboden (10) für Fahrzeuge ausgebildete Platte lose in das Fahrzeug eingelegt wird.

13. Verfahren zur Herstellung einer Platte für den Innenausbau in Fahrzeugen, insbesondere einer Platte nach einem der Ansprüche 1 bis 12, dadurch gekennzeichnet, daß eine OSB-Platte (11) auf ihrer einen Oberfläche (12) mit einem Kunststoffbelag (14) und auf ihrer anderen Oberfläche (13) mit einer Gegenkaschierung (15) beschichtet wird und daß die Beschichtung der OSB-Platte (11) mit dem Kunststoffbelag (14) und der Gegenkaschierung (15) gleichzeitig erfolgt.

14. Verfahren nach Anspruch 13, dadurch gekennzeichnet, daß die Beschichtung der OSB-Platte (11) durch ein Kaschierverfahren, vorzugsweise durch ein Roll-Kaschierverfahren erfolgt.
